# EUROPEAN PATENT APPLICATION

(11) **EP 2 352 239 A1**
(43) Date of publication of application: **03.08.2011**
(21) Application number: 09821523.9
(22) Date of filing: 23.06.2009
(51) Int. Cl.: H04B 10/00

(54) **A METHOD, DEVICE AND SYSTEM FOR OPTIC-DEMODULATING THE OPTICAL CARRIER OF POLARIZATION DIVISION MULTIPLEXING**

(30) Priority: 22.10.2008 CN 200810167346
(71) Applicant: Huawei Technologies Co., Ltd., Shenzhen, Guangdong 518129 (CN)
(72) Inventor: XIONG, Qianjin, Guangdong 518129 (CN); LI, Liangchuan, Guangdong 518129 (CN); HUANG, Yuanda, Guangdong 518129 (CN)
(74) Representative: Thun, Clemens
(86) International application number: PCT/CN2009/072405
(87) International publication number: WO 2010/045802

(57) **Abstract**

A method, device, and system for optical Polarization Division Multiplexing (PDM) of an optical carrier are provided, which can improve the frequency spectrum utilization ratio of the system, improve the Chromatic Dispersion (CD) and Polarization Mode Dispersion (PMD) tolerance, and meanwhile lower the apparatus requirements and complexity of a receiving end. The method includes: splitting an optical carrier into two or more sets of optical sub-carriers at a receiving end; respectively performing optical PDM on each set of the optical sub-carriers to obtain two sets of to-be-demodulated optical signals; and extracting a part of signals from each set of the to-be-demodulated signals to calculate features characterizing polarization states, controlling feedback signals according to the features, and correspondingly adjusting a polarization state of each set of the optical sub-carriers. With the device combining optical division into two or more sets of sub-carriers with optical PDM, an optical carrier signal can be split in an optical modulation format into four or more sets of signals for processing, and delay interference can be performed directly on an optical wave by using Differential Quadrature Phase Shifted Keying (DQPSK) demodulators to obtain by detection output signals.

## Description

The application claims priority to Chinese Patent Application No. 200810167346.5, filed on October 22, 2008, and entitled "METHOD, DEVICE, AND SYSTEM FOR OPTICAL POLARIZATION DIVISION MULTIPLEXING OF OPTICAL CARRIER", which is incorporated herein by reference in its entirety.

### FIELD OF THE TECHNOLOGY

The present invention relates to the field of optical communication technologies, and more particularly to a method, device, and system for optical Polarization Division Multiplexing (PDM) of an optical carrier.

### BACKGROUND OF THE INVENTION

With the development of optical communication technologies, the single channel rate is increasingly improved, and currently has reached or exceeded 40 Gbps. The improvement of the rate inevitably results in higher requirements for the frequency spectrum utilization ratio of the system, optoelectronic apparatuses, and the Chromatic Dispersion (CD) and Polarization Mode Dispersion (PMD) tolerance.

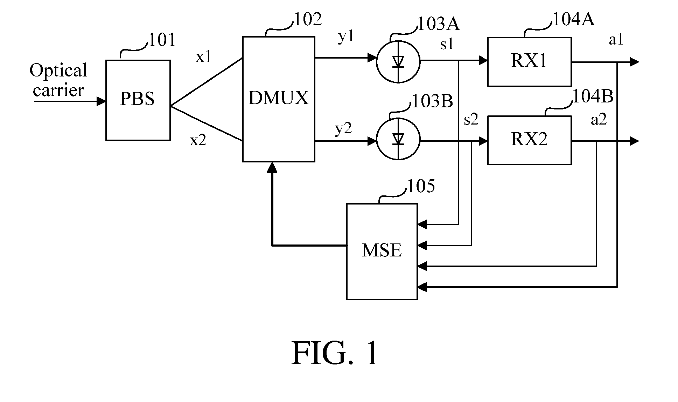

Referring to FIG. 1, in the prior art, optical PDM is performed by a Polarization Beam Splitter (PBS) 101 on a PDM modulated signal of an optical carrier at a receiving end to obtain signals x1 and x2. An inverse matrix of a channel is estimated by a Demultiplexer (DMUX) 102 by using a Minimum Mean Square Error Estimation (MSE) algorithm 105, the estimation of the inverse matrix of the channel is controlled by mean square errors a1 and a2 of the demodulated signals, and the DMUX 102 outputs signals y1 and y2; y1 and y2 are respectively converted into electrical signals s1 and s2 through photodiodes (103A, 103B), and then demodulated and output by Receivers (RXs) (104A, 104B), and the RXs realize the signal demodulation function.

In the prior art, the frequency spectrum utilization ratio of the system is improved by performing PDM on an optical carrier, where a PDM modulated signal is converted into electrical signals and then demodulated, and various parameters of a DMUX are controlled by using mean square errors of the demodulated signals as feedback signals, so that the requirements for an Analog to Digital Converter (ADC) and other apparatuses are high. Moreover, since a signal is split into two sets of signals for transmission in single-carrier PDM, the rate of each set of the signals is still high, so that even if the frequency spectrum utilization ratio can be improved to a certain degree through code pattern or filter adjustment, such improvement is limited and easily impairs the signal.

### SUMMARY OF THE INVENTION

Accordingly, embodiments of the present invention provide a method, device, and system for optical PDM of an optical carrier, which can improve the frequency spectrum utilization ratio of the system, improve the CD and PMD tolerance, and meanwhile lower the apparatus requirements and complexity of a receiving end.

In order to achieve the objectives, the present invention is implemented through the following technical solutions.

An embodiment of the present invention provides a method for optical PDM of an optical carrier, where the method includes the following steps.

The optical carrier is split into two or more sets of optical sub-carriers at a receiving end.

Optical PDM is performed on each set of optical sub-carriers to obtain two sets of to-be-demodulated optical signals respectively.

A part of signals are extracted from each set of the to-be-demodulated optical signals to calculate features characterizing polarization states, feedback signals are controlled according to the features, and a polarization state of each set of optical sub-carriers is adjusted correspondingly.

An embodiment of the present invention further provides a device for optical PDM of an optical carrier, where the device includes an optical sub-carrier splitting device, PBSs, feedback processors, and Polarization Controllers (PCs).

The optical sub-carrier splitting device is configured to split the optical carrier into two or more sets of optical sub-carriers at a receiving end.

The PBSs are configured to respectively perform optical PDM on each set of optical sub-carriers obtained by the optical sub-carrier splitting device to obtain two sets of to-be-demodulated optical signals.

The feedback processors are configured to extract a part of signals from each set of the to-be-demodulated optical signals that are obtained by optical PDM of the PBSs to calculate features characterizing polarization states, and control and input feedback signals into the PCs according to the features.

The PCs are configured to correspondingly adjust an incident angle of each set of the optical sub-carriers according to the feedback signals input by the feedback processors.

An embodiment of the present invention further provides a system for optical PDM of an optical carrier, where the system includes a sending end device and a receiving end device.

The sending end device is configured to split the optical carrier into two or more sets of optical sub-carrier signals at a sending end, respectively modulate each set of the optical sub-carrier signals into two sets of PDM modulated signals, correspondingly combine and couple the PDM modulated signals respectively, and still output an optical carrier.

The receiving end device is configured to split the optical carrier into two or more sets of optical sub-carrier signals at a receiving end, respectively perform optical PDM on each set of the optical sub-carrier signals to obtain two sets of to-be-demodulated optical signals, extract a part of signals from each set of the to-be-demodulated optical signals to calculate features characterizing polarization states, control feedback signals according to the features, and correspondingly adjust a polarization state of each set of the optical sub-carriers.

As can be known from the technical solutions, an optical carrier is split into two or more sets of optical sub-carriers at a receiving end, optical PDM is performed respectively on each set of the optical sub-carriers to obtain two sets of to-be-demodulated optical signals, a part of signals are extracted from each set of the to-be-demodulated optical signals to calculate features characterizing polarization states, feedback signals are controlled according to the features, and a polarization state of each set of the optical sub-carriers is adjusted correspondingly, so that an optical carrier signal can be split in an optical modulation format into four or more sets of signals, and the line rate can be reduced to lower than 1/4 of the original one, which improves the frequency spectrum utilization ratio of the system, improves the CD and PMD tolerance, and meanwhile lowers the apparatus requirements and complexity of the receiving end by accomplishing optical PDM in the form of an optical wave without complex calculation.

### BRIEF DESCRIPTION OF THE DRAWINGS

To make the technical solution of the present invention clearer, the accompanying drawings for illustrating the embodiments of the present invention or the prior art are outlined below. Apparently, the accompanying drawings are for the exemplary purpose only, and person having ordinary skill in the art can derive other drawings from such accompanying drawings without any creative effort.
FIG. 1 is a structural view of a receiving end device for optical PDM in the prior art;
FIG. 2 is a structural view of a device for optical PDM of an optical carrier according to an embodiment of the present invention;
FIG. 3 is a structural view of an optical sub-carrier splitting device according to an embodiment of the present invention;
FIG. 4 is a structural view of a preferred device for optical PDM of an optical carrier according to an embodiment of the present invention;
FIG. 5 is a flow chart of a method for optical PDM of an optical carrier according to an embodiment of the present invention;
FIG. 6 is a structural view of a device at a sending end for generating an optical carrier according to an embodiment of the present invention; and
FIG. 7 is a schematic view of a system for optical PDM of an optical carrier according to an embodiment of the present invention.

### DETAILED DESCRIPTION OF THE EMBODIMENTS

The technical solutions provided in the embodiments of the present invention are described in further detail below with reference to the accompanying drawings. It should be noted that, for ease of description, the technical solutions in the embodiments of the present invention are illustrated by splitting an optical carrier into two sets of optical sub-carriers, and persons skilled in the art should understand that splitting the optical carrier into two or more sets of optical sub-carriers should fall within the protection scope of the present invention.

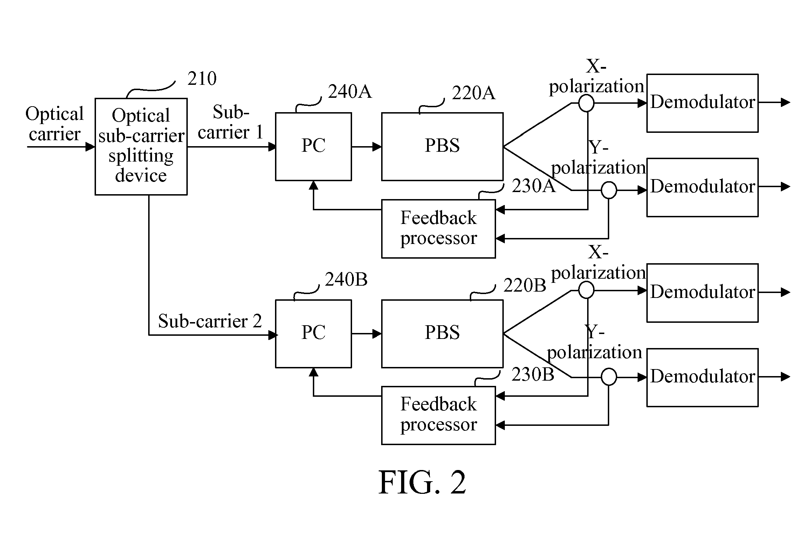

FIG. 2 shows a device for optical PDM of an optical carrier according to an embodiment of the present invention. Referring to FIG. 2, the device includes an optical sub-carrier splitting device 210, PBSs (220A, 220B), feedback processors (230A, 230B), and PCs (240A, 240B).

The optical sub-carrier splitting device 210 is configured to split the optical carrier into two or more sets of optical sub-carriers at a receiving end.

The PBSs (220A, 220B) are configured to respectively perform optical PDM on each set of the optical sub-carriers obtained by the optical sub-carrier splitting device 210 to obtain two sets of to-be-demodulated optical signals.

The feedback processors (230A, 230B) are configured to extract a part of signals from each set of the to-be-demodulated optical signals that are obtained by optical PDM of the PBSs to calculate features characterizing polarization states, and control and input feedback signals into the PCs according to the features.

The PCs (240A, 240B) are configured to correspondingly adjust an incident angle of each set of the optical sub-carriers according to the feedback signals input by the feedback processors.

For example, identification signals are added to PDM modulated signals of each set of the optical sub-carriers respectively at a sending end, and the feedback processors calculate features characterizing polarization states according to the identification signals detected from the signals output from the PBSs, and control and return feedback signals to the PCs.

The identification signals are perturbation signals added at the sending end. The identification signals detected from a part of the signals output from the PBSs are configured to calculate and adjust incident angles of optical signals entering the PBSs.

The feedback signals contain the features characterizing the polarization states, the features are extracted from the feedback processors, an initial value is set for multiple outputs of the feedback processors respectively, a feature extracted each time is compared with the feature pre-added at the sending end to see their similarity by changing the values of the outputs, the multiple outputs of the feedback processors are changed continuously according to the optimization algorithm, and finally the optical signal is adjusted so that the extracted feature quantity is most similar to the feature pre-added at the sending end.

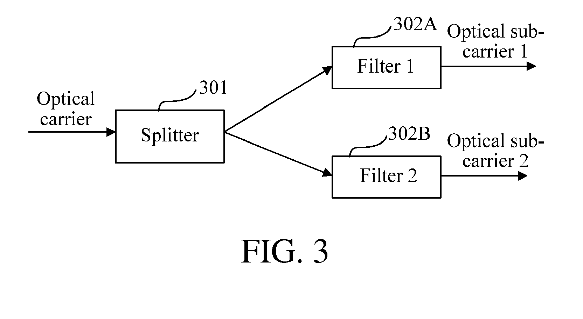

Referring to FIG. 3, the optical sub-carrier splitting device 210 includes a splitter 301 and two or more filters (302A, 302B) with different central frequencies.

The splitter 301 is configured to split the optical carrier into two or more sets of optical signals.

The two or more filters (302A, 302B) with different central frequencies are configured to respectively perform filtering with different central frequencies on each set of optical signals obtained after splitting to output two or more sets of optical sub-carrier signals with different wavelengths.

The optical carrier is split into two or more sets of optical signals by the splitter 301, and then each set of optical signals enters the filters to be filtered respectively. Since the filter 1 and filter 2 have different central frequencies, signal 1 and signal 2 output by the filters are two sets of optical signals with different wavelengths, thereby realizing splitting of the sub-carrier.

Optical PDM is performed by the PBSs on each set of optical sub-carrier signals obtained after splitting respectively to obtain X-polarized and Y-polarized to-be-demodulated optical signals, and these to-be-demodulated optical signals are respectively demodulated and output.

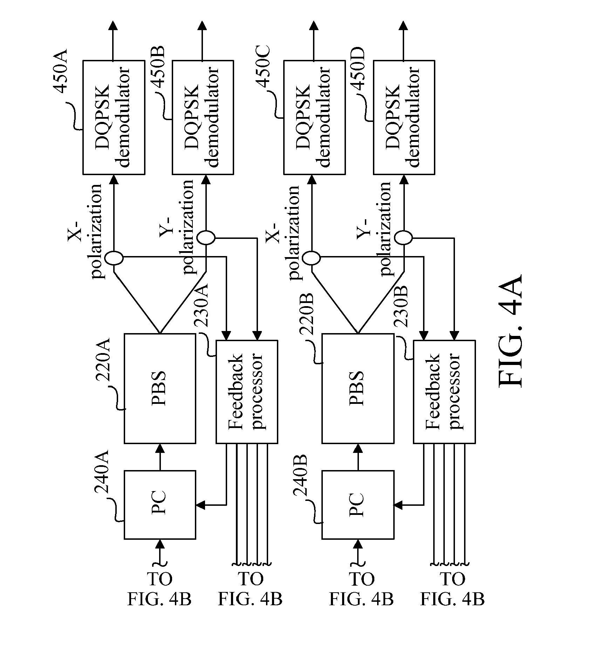

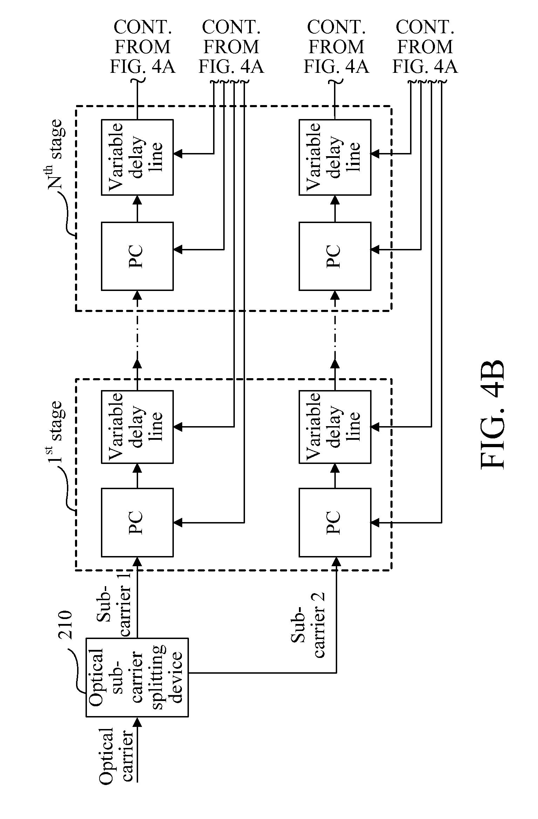

In a preferred embodiment, referring to FIG. 4, demodulators employed in a device for optical PDM of an optical carrier according to an embodiment of the present invention are Differential Quadrature Phase Shifted Keying (DQPSK) demodulators (450A, 450B, 450C, 450D). Each set of the to-be-demodulated signals is demodulated by the DQPSK demodulators, delay coherent demodulation is performed on the optical wave directly to remove the carrier and obtain phase difference information, and finally, information bits are obtained by de-mapping the phase difference information.

A Quadrature Phase Shifted Keying (QPSK) demodulator modulates a carrier phase, where two set of signals (bit sequences) have a total of four possibilities: 00, 01, 10, and 11, and four different phases are selected for the carrier according to the different signal bit sequences of the two set of signals, that is, the phases are one to one corresponding to the information bits. DQPSK performs a differential operation based on QPSK, so that differences between phases of signals at two continuous moments are corresponding to the sending sequence, that is, phase differences of the continuous signals are one-to-one corresponding to the information bits. As compared with QPSK, DQPSK can directly perform delay coherence on the optical wave to remove the carrier and directly obtain the phase difference information, and then obtain by demodulation the information bits, while QPSK is incapable of performing delay coherent demodulation.

In a preferred embodiment, still referring to FIG. 4, the device for optical PDM of the optical carrier according to the embodiment of the present invention further includes N-level PCs and N-level variable delay lines.

The N-level PCs are configured to correspondingly adjust incident angles of optical signals entering the N-level variable delay lines according to feedback signals input by the feedback processors.

The N-level variable delay lines are configured to control PMD compensation quantities of the variable delay lines according to the feedback signals input by the feedback processors, and correspondingly perform N-level compensation on the PMD of each set of the optical sub-carriers, where N is a positive integer greater than or equal to 1.

The feedback processors respectively return signals output by the PBSs to the N-level PCs and the N-level variable delay lines, and detect PMD characterizing signals from the feedback signals for calculating PMD compensation quantities, so that the PCs adjust incident angles of optical signals entering the variable delay lines, and the variable delay lines control the PMD compensation quantities, that is, delay quantities entering the variable delay lines.

The number N of levels for PMD compensation is selected according to the actual influence of PMD on the system. If the influence of PMD on the system is great, PMD compensation of multiple levels is required; while if the influence of PMD on the system is little, PCs and variable delay lines of few levels may be selected for PMD compensation, or PMD compensation is not needed.

With the device for optical PDM into dual optical sub-carriers according to the embodiment of the present invention, the optical sub-carrier splitting device splits an optical carrier into two or more sets of optical sub-carrier signals at the receiving end, the PBSs respectively perform optical PDM on each set of the optical sub-carrier signals to obtain two sets of to-be-demodulated optical signals, the feedback processors extract a part of signals from each set of the to-be-demodulated signals that are obtained by optical PDM of the PBSs to calculate features characterizing polarization states, and control and input feedback signals into the PCs according to the features, and the PCs correspondingly adjust an incident angle of each set of the optical sub-carriers. With this device combining optical division into two or more sets of sub-carriers with optical PDM, the optical carrier can be split in an optical modulation format into four or more sets of signals, and the line rate can be reduced to lower than 1/4 of the original one, so that, as compared with the prior art, the frequency spectrum utilization ratio of the system is further improved, the CD and PMD tolerance is improved, and the apparatus requirements and complexity of the receiving end are lowered by accomplishing optical PDM in the form of an optical wave without complex calculation. Meanwhile, N-level compensation is performed on the PMD of each set of the optical sub-carriers by using the N-level PCs and the N-level variable delay lines, and delay interference is directly performed on the optical wave for each set of the formed to-be-demodulated signals by using DQPSK demodulators to obtain by detection output signals, so that the frequency spectrum utilization ratio of the system is further improved.

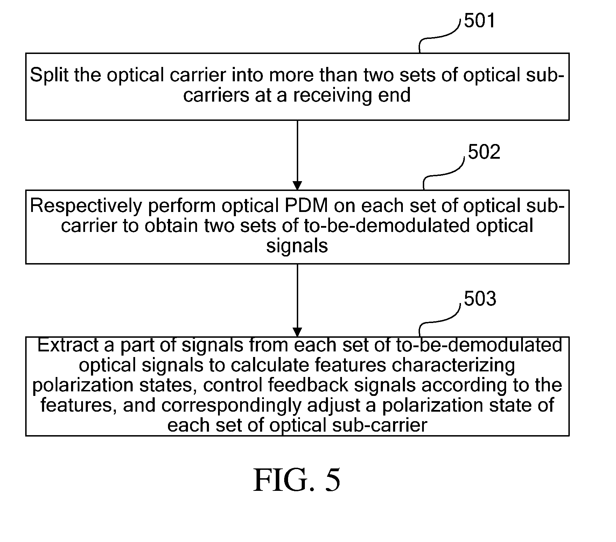

Referring to FIG. 5, a method for optical PDM of an optical carrier is further provided in an embodiment of the present invention. The method includes the following steps.

In step 501, the optical carrier is split into two or more sets of optical sub-carrier signals at a receiving end.

The optical carrier is split into two or more sets of optical sub-carrier signals by using an optical sub-carrier splitting device at the receiving end. First, a splitter in the optical sub-carrier splitting device splits the optical carrier into two or more sets of optical signals, and then filters each set of the optical signals by filters with different central frequencies respectively, so as to output two or more sets of optical sub-carrier signals with different wavelengths.

In order to obtain PDM modulated optical carrier received signals that meet the requirements, one method is to split the optical carrier into two or more sets of optical sub-carriers at a sending end, respectively modulate each optical sub-carrier into two sets of PDM modulated signals, correspondingly combine and couple the two sets of PDM modulated signals respectively, and still output an optical carrier.

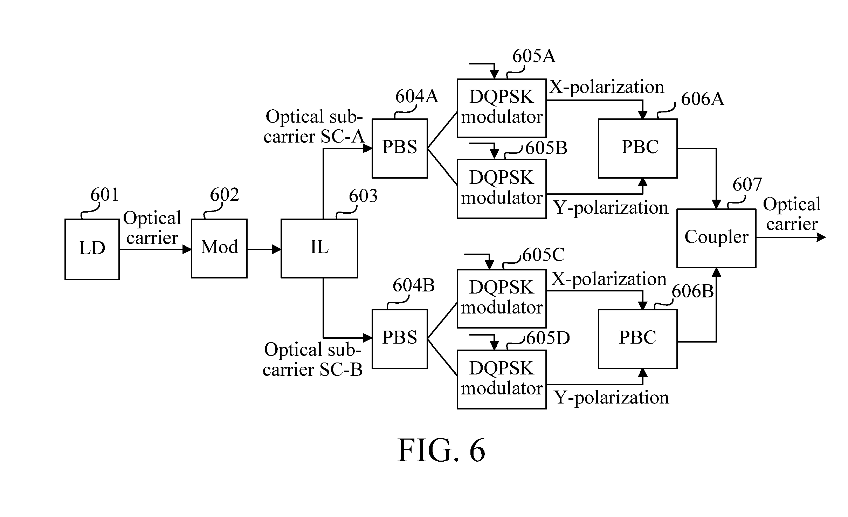

A sending end device is illustrated as follows. Referring to FIG. 6, a light source (Laser Diode, LD) 601 emits an optical carrier with a standard wavelength, the optical carrier is modulated by a Modulator (Mod) 602 to generate two optical sub-carriers SC-A and SC-B with non-standard wavelengths. In order to avoid Inter-symbol Interference (ISI) between different wavelengths, central frequencies of the two sub-carriers must be separated, and a central frequency difference between the two sub-carriers SC-A and SC-B may be selected to be 20 GHz. Since an excessively large frequency difference is certainly a waste of the frequency spectrum, 20 GHz is a compromise of improving the frequency spectrum utilization ratio while avoiding the ISI.

For the two sets of optical sub-carriers generated by modulation of the Mod, an Interleaver (IL) 603 is employed to separate the two sub-carriers with different central frequencies. Based on the orthogonality of X and Y polarization states, each set of the sub-carriers is polarization division multiplexed into X-polarized and Y-polarized signals by PBSs (604A, 604B) respectively, the X-polarized and Y-polarized signals are respectively modulated by modulators to obtain a total of four sets of modulated signals, so that information content per unit of time is four times of the original one, and then combined by Polarization Beam Combiners (PBCs) (606A, 606B) respectively, and finally the two PDM modulated optical sub-carriers are coupled and output by a coupler 607, so as to obtain a PDM modulated signal of dual optical sub-carriers.

It should be noted that, the LD generates the standard wavelength meeting the requirements of the International Telecommunications Union (ITU), and for one set of signals, the signals are modulated to the standard wavelength. Here, since dual optical sub-carriers need to be generated, two sets of carriers are required, the two sets of carriers are respectively located at two sides of the original standard wavelength and have a certain wavelength difference with the standard wavelength, and thus the wavelengths of the two carriers are referred to as non-standard wavelengths. A Mach-Zehnder Modulator (MZM) may be employed to obtain two optical sub-carriers with a central frequency difference of 20 GHz.

It should be further noted that, DQPSK modulators (605A, 605B, 605C, 605D) shown in FIG. 6 may also be employed to respectively modulate the X-polarized and Y-polarized signals obtained by PDM of each set of sub-carrier into polarization division multiplexed DQPSK signals, then the polarization division multiplexed DQPSK signals are respectively combined and coupled, and a PDM-DQPSK signal of dual optical sub-carriers is output.

In step 502, optical PDM is performed on each set of optical sub-carrier signal to obtain two sets of to-be-demodulated optical signals respectively.

In a preferred embodiment, if a PDM-DQPSK signal of dual optical sub-carriers is output at the sending end, at the receiving end, DQPSK demodulators are employed to respectively demodulate the four sets of to-be-demodulated optical signals after the optical PDM, directly perform delay coherent demodulation on the optical wave to remove the carrier and obtain phase difference information, and finally obtain information bits by demapping the phase difference information.

In step 503, a part of signals are extracted from each set of the to-be-demodulated signals to calculate a feature characterizing a polarization state, a feedback signal is controlled according to the feature, and the polarization state of each set of the optical sub-carrier is adjusted correspondingly.

The feedback processing method employed in the embodiment of the present invention is as follows. Identification signals (perturbation signals) are added to PDM modulated signals of each set of optical sub-carrier signals at the sending end, where the identification signals may be added before, during, or after the PDM modulation of each set of the optical sub-carriers. At the receiving end, a part of signal is extracted from each set of the to-be-demodulated signals to calculate features characterizing polarization states, and feedback signals are controlled according to the features. The feedback processors calculate and return a part of the signals output by the PBSs to the PCs, the identification signals are detected from the feedback signals, a feature extracted each time is compared with the feature pre-added at the sending end to see their similarity, the multiple outputs of the feedback processors are changed continuously according to the optimization algorithm, and finally the optical signal is adjusted so that the extracted feature quantity is most similar to the feature pre-added at the sending end. Incident angles of optical signals entering the PBSs are calculated according to the identification signals, and the incident angles of the optical signals entering the PBSs are adjusted by the PCs respectively.

In order to further improve the PMD tolerance of the system, in a preferred embodiment, N-level PCs and N-level variable delay lines may be added before the PBSs at the receiving end, which extract a part of signals from each set of the to-be-demodulated signals to calculate a PMD compensation quantity of each set of optical sub-carrier, correspondingly adjust incident angles of optical signals entering the variable delay lines through the PCs, and meanwhile respectively perform N-level compensation on the PMD of each set of the optical sub-carriers, where N is a positive integer greater than or equal to 1.

The number N of levels for PMD compensation is selected according to the actual influence of PMD on the system. If the influence of PMD on the system is great, PMD compensation of multiple levels is required; while if the influence of PMD on the system is little, PCs and variable delay lines of few levels may be selected for PMD compensation, or PMD compensation is not needed.

With the method for optical PDM of the optical carrier provided in the embodiment of the present invention, the optical carrier is split into two or more sets of optical sub-carrier signals at the receiving end, optical PDM is performed on each set of optical sub-carrier signal to obtain two sets of to-be-demodulated optical signals respectively, and a part of signal is extracted from each set of the to-be-demodulated signals to calculate features characterizing polarization states, feedback signals are controlled according to the features, and the polarization state of each set of the optical sub-carriers is adjusted correspondingly, so that the optical carrier signal can be split in an optical modulation format into four or more sets of signals, and the line rate can be reduced to lower than 1/4 of the original one, which, as compared with the prior art, further improves the frequency spectrum utilization ratio of the system, improves the CD and PMD tolerance, and lowers the apparatus requirements and complexity of the receiving end by accomplishing optical PDM in the form of an optical wave without complex calculation. Meanwhile, N-level compensation is performed on the PMD of each set of the optical sub-carriers, and delay interference is directly performed on the optical wave for each set of the formed to-be-demodulated signals by using DQPSK demodulators to obtain by detection output signals, so that the frequency spectrum utilization ratio of the system is further improved.

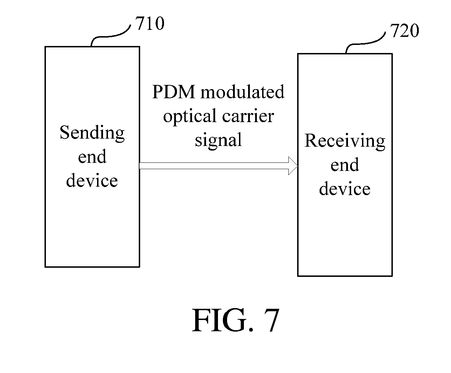

Referring to FIG. 7, a system for optical PDM of an optical carrier is further provided in an embodiment of the present invention. The system includes a sending end device 710 and a receiving end device 720.

The sending end device 710 is configured to split the optical carrier into two or more sets of optical sub-carrier signals at a sending end, respectively modulate each set of the optical sub-carrier signals into two sets of PDM modulated signals, correspondingly combine and couple the PDM modulated signals respectively, and still output an optical carrier.

The receiving end device 720 is configured to split the optical carrier into two or more sets of optical sub-carrier signals at a receiving end, respectively perform optical PDM on each set of the optical sub-carrier signals to obtain two sets of to-be-demodulated optical signals, extract a part of signals from each set of the to-be-demodulated signals to calculate features characterizing polarization states, control feedback signals according to the features, and correspondingly adjust the polarization state of each set of the optical sub-carriers.

At the sending end, a light source emits a single optical carrier, the optical carrier is modulated by a modulator to generate two or more sets of optical sub-carriers with different wavelengths, and an IL is employed to separate the sub-carriers with different central frequencies; based on the orthogonality of X and Y polarization states, each set of the sub-carrier is split into X-polarized and Y-polarized optical signals by PBSs respectively, and the X-polarized and Y-polarized optical signals are respectively modulated by modulators, then correspondingly combined by PBCs respectively, and finally coupled and output as still an optical carrier by a coupler.

At the receiving end, the optical carrier is split into two or more sets of optical sub-carriers by using an optical sub-carrier splitting device, the optical sub-carrier splitting device first splits the optical carrier into two or more sets of optical signals, and then filters each set of the optical signals by filters with different central frequencies respectively to output two or more sets of optical sub-carrier signals with different wavelengths; and optical PDM is performed on each set of the optical sub-carrier signals respectively to form four or more sets of to-be-demodulated optical signals.

At the sending end, identification signals are added to PDM modulated signals of each set of the optical sub-carrier signals respectively; at the receiving end, the identification signals are detected from the extracted part of signals, incident angles of optical signals entering the PBSs are calculated according to the identification signals, feedback signals are controlled according to the incident angles, and the incident angles of the optical signals entering the PBSs are adjusted and aligned by the PCs correspondingly, so that the frequency spectrum utilization ratio of the system can be improved, the CD and PMD tolerance can be improved, and meanwhile the apparatus requirements and complexity of the receiving end can be lowered.

In order to further improve the PMD tolerance of the system, the receiving end device extracts a part of signals from each set of the to-be-demodulated signals to calculate a PMD compensation quantity of each set of the optical sub-carriers, controls feedback signals according to the PMD compensation quantities, and respectively performs N-level compensation on the PMD of each set of the optical sub-carriers, where N is a positive integer greater than or equal to 1.

The specific method may be as follows. N-level PCs and N-level variable delay lines are added before the PBSs at the receiving end, feedback processors extract a part of signals from output signals of the PBSs to calculate a PMD compensation quantity of each set of the optical sub-carriers, and control and return feedback signals to each level of PCs and variable delay lines respectively according to the PMD compensation quantities, incident angles of optical signals entering the variable delay lines are adjusted by the PCs, and the PMD compensation quantities are controlled by the variable delay lines.

The number N of levels for PMD compensation is selected according to the actual influence of PMD on the system. If the influence of PMD on the system is great, PMD compensation of multiple levels is required; while if the influence of PMD on the system is little, PCs and variable delay lines of few levels may be selected for PMD compensation, or PMD compensation is not needed.

In order to further improve the frequency spectrum utilization ratio of the system, a DQPSK modulator may be employed to modulate each set of the optical sub-carrier signals into a polarization division multiplexed DQPSK modulated signal in the sending end device, and a DQPSK demodulator may be employed to demodulate each set of the to-be-demodulated signals in the receiving end device, directly perform delay coherent demodulation on the optical wave to remove the carrier and obtain phase difference information, and finally obtain information bits by demapping the phase difference information.

The method, device, and system for optical PDM of an optical carrier provided in the embodiments of the present invention are introduced above in detail. In the present invention, the optical carrier is split into two or more sets of optical sub-carrier signals at the receiving end, optical PDM is performed on each set of the optical sub-carrier signals to obtain two sets of to-be-demodulated optical signals respectively, and a part of signals are extracted from each set of the to-be-demodulated signals to calculate features characterizing polarization states, feedback signals are controlled according to the features, and the polarization state of each set of optical sub-carriers is adjusted correspondingly, so that the optical carrier signal can be split in an optical modulation format into four or more sets of signals, and optical PDM can be accomplished in the form of an optical wave without complex calculation, which improves the frequency spectrum utilization ratio of the system, improves the CD and PMD tolerance, and meanwhile lowers the apparatus requirements and complexity of the receiving end. The embodiments are merely illustrated for ease of understanding the method and ideas of the present invention. However, the scope of the present invention is not limited thereto. Changes or replacements readily apparent to persons skilled in the prior art within the technical scope of the present invention should fall within the scope of the present invention. Therefore, the protection scope of the present invention is subject to the appended claims.

## Claims

1. A method for optical Polarization Division Multiplexing (PDM) of an optical carrier, comprising:
splitting the optical carrier into two or more sets of optical sub-carriers at a receiving end;
respectively performing optical PDM on each set of the optical sub-carriers to obtain two sets of to-be-demodulated optical signals; and
extracting a part of signals from each set of the to-be-demodulated signals to calculate features characterizing polarization states, controlling feedback signals according to the features, and correspondingly adjusting a polarization state of each set of the optical sub-carriers.

2. The method according to claim 1, further comprising:
splitting the optical carrier into two or more sets of optical sub-carriers at a sending end;
respectively modulating each set of the optical sub-carriers into two sets of PDM modulated signals; and
correspondingly combining and coupling the PDM modulated signals respectively, and outputting an optical carrier.

3. The method according to claim 1, wherein the splitting the optical carrier into two or more sets of optical sub-carriers at the receiving end comprises:
splitting the optical carrier into two or more sets of optical signals at the receiving end; and
respectively performing filtering with different central frequencies on each set of optical signal, so as to output two or more sets of optical sub-carrier signals with different wavelengths.

4. The method according to claim 2, wherein identification signals are added to the PDM modulated signals of each set of the optical sub-carriers respectively at the sending end; and
the extracting the part of signal from each set of the to-be-demodulated signals to calculate the features characterizing the polarization states, controlling the feedback signals according to the features, and correspondingly adjusting the polarization state of each set of the optical sub-carriers comprises:
detecting the identification signals from the extracted part of signals at the receiving end, calculating an incident angle of each set of the optical sub-carriers according to the identification signals, controlling the feedback signals according to the incident angles, and correspondingly adjusting the incident angle of each set of the optical sub-carriers.

5. The method according to claim 4, wherein the extracting the part of signal from each set of the to-be-demodulated signals to calculate the features characterizing the polarization states, controlling the feedback signals according to the features, and correspondingly adjusting the polarization state of each set of the optical sub-carriers further comprises:
detecting the identification signals from the extracted part of signals at the receiving end, calculating a Polarization Mode Dispersion (PMD) compensation quantity of each set of the optical sub-carriers according to the identification signals, controlling the feedback signals according to the PMD compensation quantities, and correspondingly performing N-level compensation on the PMD of each set of the optical sub-carriers, where N is a positive integer greater than or equal to 1.

6. The method according to claim 1, further comprising:
directly performing delay interference on an optical wave for the adjusted to-be-demodulated optical signals, so as to obtain by detection demodulated output signals.

7. A device for optical Polarization Division Multiplexing (PDM) of an optical carrier, comprising:
an optical sub-carrier splitting device, configured to split the optical carrier into two or more sets of optical sub-carriers at a receiving end;
Polarization Beam Splitters (PBSs), configured to respectively perform optical PDM on each set of the optical sub-carriers obtained by the optical sub-carrier splitting device to obtain two sets of to-be-demodulated optical signals;
feedback processors, configured to extract a part of signals from each set of the to-be-demodulated signals that are obtained by optical PDM of the PBSs to calculate features characterizing polarization states, and control and input feedback signals into Polarization Controllers (PCs) according to the features; and
the PCs, configured to correspondingly adjust an incident angle of each set of the optical sub-carriers according to the feedback signals input by the feedback processors.

8. The device according to claim 7, further comprising:
N-level PCs, configured to correspondingly adjust incident angles of optical signals entering N-level variable delay lines according to the feedback signals input by the feedback processors; and
the N-level variable delay line, configured to control Polarization Mode Dispersion (PMD) compensation quantities of the variable delay lines according to the feedback signals input by the feedback processors, and correspondingly perform N-level compensation on the PMD of each set of the optical sub-carriers,
where N is a positive integer greater than or equal to 1.

9. The device according to claim 7, wherein the optical sub-carrier splitting device comprises:
a splitter, configured to split the optical carrier into more than sets of two optical signals; and
two or more filters with different central frequencies, configured to respectively perform filtering with different central frequencies on each set of optical signal obtained after splitting, so as to output two or more sets of optical sub-carrier signals with different wavelengths.

10. The device according to claim 7 or 8, further comprising:
Differential Quadrature Phase Shifted Keying (DQPSK) demodulators, configured to directly perform delay interference on an optical wave for the adjusted to-be-demodulated optical signals, so as to obtain by detection demodulated output signals.

11. A system for optical Polarization Division Multiplexing (PDM) of an optical carrier, comprising:
a sending end device, configured to split the optical carrier into two or more sets of optical sub-carrier signals at a sending end, respectively modulate each set of the optical sub-carrier signals into two sets of PDM modulated signals, correspondingly combine and couple the PDM modulated signals respectively, and still output an optical carrier; and
a receiving end device, configured to split the optical carrier into two or more sets of optical sub-carrier signals at a receiving end, respectively perform optical PDM on each set of the optical sub-carrier signals to obtain two sets of to-be-demodulated optical signals, extract a part of signal from each set of the to-be-demodulated signals to calculate features characterizing polarization states, control feedback signals according to the features, and correspondingly adjust a polarization state of each set of the optical sub-carriers.

12. The system according to claim 11, wherein
the sending end device is further configured to respectively add identification signals to the PDM modulated signals of each set of the optical sub-carriers; and
the receiving end device is further configured to detect the identification signals from the extracted part of signals, calculate an incident angle of each set of the optical sub-carriers according to the identification signals, control the feedback signals according to the incident angles, and correspondingly adjust the incident angle of each set of the optical sub-carriers; and calculate a Polarization Mode Dispersion (PMD) compensation quantity of each set of the optical sub-carriers according to the identification signals, control the feedback signals according to the PMD compensation quantities, and correspondingly perform N-level compensation on the PMD of each set of the optical sub-carriers, where N is a positive integer greater than or equal to 1.

13. The system according to claim 11 or 12, wherein
the sending end device is further configured to respectively modulate the PDM modulated signals into polarization division multiplexed Differential Quadrature Phase Shifted Keying (DQPSK) modulated signals by using DQPSK modulators; and
the receiving end device is further configured to directly perform delay interference on an optical wave for the adjusted to-be-demodulated optical signals by using DQPSK demodulators respectively, so as to obtain by detection demodulated output signals.
